(19) **Europäisches Patentamt**
**European Patent Office**
**Office européen des brevets**

(11) **EP 4 318 871 A1**

(12) **EUROPEAN PATENT APPLICATION**
published in accordance with Art. 153(4) EPC

(43) Date of publication:
**07.02.2024 Bulletin 2024/06**

(21) Application number: **21944596.2**

(22) Date of filing: **10.06.2021**

(51) International Patent Classification (IPC):
**H02J 50/12** (2016.01)     **H02J 50/80** (2016.01)
**H02M 1/44** (2007.01)

(52) Cooperative Patent Classification (CPC):
**H02J 50/12; H02J 50/80; H02M 1/44**

(86) International application number:
**PCT/CN2021/099509**

(87) International publication number:
**WO 2022/257087 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **GAO, Lixu
  Shenzhen, Guangdong 518129 (CN)**
• **JIA, Ligang
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **METHOD AND APPARATUS FOR WIRELESS CHARGING**

(57)     The present disclosure relates to a method for controlling wireless charging and an apparatus. The method includes: receiving a first signal representing a peak current or a root-mean-square current of an alternating current flowing through a secondary coil; receiving a second signal representing a direct current used to charge a load, where the direct current is generated by rectifying the alternating current; comparing the first signal with the second signal; and determining, based on a comparison result, whether a current switching frequency of wireless charging is at an ideal switching frequency. If the switching frequency of the wireless charging is not at the ideal switching frequency, the switching frequency of the wireless charging may be correspondingly adjusted to the ideal switching frequency, so that wireless charging is performed at the ideal switching frequency. This can improve wireless charging efficiency.

1100

```
┌──────────────────────────────────────────────────────┐
│ Receive a first signal representing an alternating     │  1102
│ current flowing through a charging coil                │
└──────────────────────────────────────────────────────┘
                          │
                          ▼
┌──────────────────────────────────────────────────────┐
│ Receive a second signal representing a direct current  │  1104
│ used to charge a load                                  │
└──────────────────────────────────────────────────────┘
                          │
                          ▼
┌──────────────────────────────────────────────────────┐
│ Generate, based on the first signal and the second     │  1106
│ signal, a frequency adjustment signal used to adjust a │
│ switching frequency of an inverter                     │
└──────────────────────────────────────────────────────┘
```

FIG. 11

EP 4 318 871 A1

## Description

## TECHNICAL FIELD

The present disclosure relates to the field of electronics, and more specifically, to a method for wireless charging and an apparatus.

## BACKGROUND

In recent years, with increasing popularity of portable lithium battery smart devices, wireless charging is increasingly widely used. Most of current wireless charging transmission protocols are based on the Qi protocol of the wireless power consortium (Wireless Power Consortium, WPC). Wireless charging based on the Qi protocol has advantages such as a high charging power and low costs, and is widely used by various manufacturers. A resonance frequency specified in most reference designs of the Qi protocol is around 100 kHz to 205 kHz. For a given target voltage and load current, the Qi protocol adjusts a switching frequency and a duty cycle of an inverter at a transmit end through a proportional-integral-derivative (proportional-integral-derivative, PID) loop to adjust an output voltage. According to the Qi protocol, both the frequency and the duty cycle are usually monotonically adjusted, for example, the duty cycle is adjusted when the frequency is fixed, or the frequency is adjusted when the duty cycle is fixed. In a case of a switching frequency below 205 kHz, the duty cycle is usually adjusted. However, in a case of a frequency of 205 kHz and above, the duty cycle is usually fixed at 50% and the frequency is adjusted.

In other wireless charging solutions, adjustment is performed by using a proprietary protocol. Generally, a transmission frequency of the wireless charging is fixed, and a wireless charging power is adjusted by adjusting a voltage and the duty cycle at the transmit end. However, transmission efficiency of both the Qi protocol and the proprietary protocol is not ideal.

## SUMMARY

In view of the foregoing problem, embodiments of the present disclosure provide a method for controlling wireless charging and a wireless charging apparatus. The method and the wireless charging apparatus can perform wireless charging at an ideal switching frequency, to improve charging efficiency.

According to a first aspect of the present disclosure, a method for controlling wireless charging is provided. The method includes: receiving a first signal representing an alternating current flowing through a secondary coil; receiving a second signal representing a direct current used to charge a load, where the direct current is generated by rectifying the alternating current; and generating, based on the first signal and the second signal, a frequency adjustment signal used to adjust a switching frequency of an inverter. The inverter is configured to generate, based on the frequency adjustment signal, an alternating current flowing through a primary coil, and the primary coil is configured to be magnetically coupled to the secondary coil, to perform the wireless charging. By comparing an alternating current of the wireless charging with a direct current charging current, it may be determined whether a current switching frequency of the wireless charging is at an ideal switching frequency, and the switching frequency of the wireless charging may be adjusted when the current switching frequency deviates from the ideal switching frequency, to improve wireless charging efficiency.

In a possible implementation, the first signal represents a peak current or a root-mean-square current of the alternating current. The generating a frequency adjustment signal used to adjust a switching frequency of an inverter includes generating the frequency adjustment signal in response to that the peak current or the root-mean-square current and the direct current meet a first relationship. The peak current or the root-mean-square current is usually readily available without increasing circuit design costs. Therefore, by using the peak current or the root-mean-square current and the direct current, whether the current switching frequency of the wireless charging is at the ideal switching frequency may be determined in a low-cost manner, and the switching frequency of the wireless charging may be adjusted when the current switching frequency deviates from the ideal switching frequency, to improve wireless charging efficiency.

In a possible implementation, the generating the frequency adjustment signal in response to that the peak current or the root-mean-square current and the direct current meet a first relationship includes: generating the frequency adjustment signal in response to that a ratio of the peak current or the root-mean-square current to the direct current is different from a first threshold.

In a possible implementation, the generating the frequency adjustment signal in response to that a ratio of the peak current or the root-mean-square current to the direct current is different from a first threshold includes: generating, in response to that the ratio is greater than the first threshold, a first frequency adjustment signal used to increase the switching frequency; or generating, in response to that the ratio is less than the first threshold, a second frequency adjustment signal used to reduce the switching frequency. By calculating the ratio and comparing the ratio with the first threshold, whether the current switching frequency of the wireless charging is at the ideal switching frequency may be determined in a simple manner, and the switching frequency of the wireless charging may be adjusted when the current switching frequency deviates from the ideal switching frequency, to improve wireless charging efficiency.

In a possible implementation, the generating the frequency adjustment signal in response to that a ratio of the peak current or the root-mean-square current to the direct current is different from a first threshold includes generating the frequency adjustment signal based on a difference between the ratio and the first threshold. The frequency adjustment signal includes information representing an adjustment amount of the switching frequency, and the adjust amount of the switching frequency is associated with the difference. A corresponding adjustment signal is generated based on the difference between the ratio and the first threshold, and the switching frequency is quickly adjusted, so that wireless charging is operated at the ideal switching frequency as soon as possible, thereby reducing energy loss in a frequency adjustment process.

In a possible implementation, the method further includes: receiving a third signal representing an adjusted alternating current flowing through the secondary coil and a fourth signal representing an adjusted direct current used to charge the load; determining, based on the third signal and the fourth signal, whether the adjusted alternating current and the adjusted direct current meet a second relationship; and generating, in response to that the adjusted alternating current and the adjusted direct current meet the second relationship, a power adjustment signal used to adjust a wireless charging power. Power adjustment is performed after the ideal switching frequency is reached, so that wireless charging can be performed at the ideal switching frequency and an expected power.

In a possible implementation, the method further includes: periodically determining, in response to generating the power adjustment signal, whether the alternating current flowing through the secondary coil and the direct current used to charge the load meet the second relationship; and if the alternating current flowing through the secondary coil and the direct current used to charge the load do not meet the second relationship, generating another frequency adjustment signal used to adjust the switching frequency. Whether the switching frequency of the wireless charging is at the ideal switching frequency is periodically detected, so that whether wireless charging is performed at the ideal switching frequency can be dynamically determined in a wireless charging process. In this way, after the ideal switching frequency is reached, for example, in a power adjustment process, the switching frequency of the wireless charging may be prevented from deviating from the ideal switching frequency again, so that wireless charging is basically always performed at the ideal switching frequency.

In a possible implementation, the alternating current represents a current at an end part of a coil of a wireless charging receive end or a current of a node directly connected to the wireless charging receive end, and the direct current represents a current used to directly charge the load. A wireless charging transmit end converts the direct current into the alternating current by using the inverter, the alternating current is transmitted to the receive end through coil coupling, and a rectifier rectifies the received alternating current to generate the direct current.

In a possible implementation, the frequency adjustment signal is transmitted to a wireless communication interface of the wireless charging transmit end by using a wireless communication interface (for example, communication by using a Bluetooth device), and after receiving the frequency adjustment signal, a controller of the wireless charging transmit end controls an alternating current of the wireless charging transmit end, so that an alternating current received by the coil of the wireless charging receive end is based on an adjusted switching frequency.

In a possible implementation, the controller of the wireless charging receive end may transmit the frequency adjustment signal to the coil of the wireless charging transmit end in a modulation manner by using the wireless secondary coil, and the controller of the wireless charging transmit end parses out the frequency adjustment signal from the coil of the wireless charging transmit end. After receiving the frequency adjustment signal, the controller of the wireless charging transmit end controls the alternating current of the wireless charging transmit end, so that the alternating current received by the coil of the wireless charging receive end is based on the adjusted switching frequency. In this way, component costs of the wireless charging transmit end and the wireless charging receive end can be further reduced.

According to a second aspect of the present disclosure, an electronic apparatus is provided. The apparatus includes: a first current sensor, configured to generate a first signal representing an alternating current flowing through a secondary coil; a second current sensor, configured to generate a second signal representing a direct current used to charge a load, where the direct current is generated by rectifying the alternating current; and a controller, configured to generate, based on the first signal and the second signal, a frequency adjustment signal used to adjust a switching frequency of an inverter. The inverter is configured to generate, based on the frequency adjustment signal, an alternating current flowing through a primary coil, and the primary coil is configured to be magnetically coupled to the secondary coil for wireless charging. By comparing an alternating current of the wireless charging with a direct current charging current, it may be determined whether a current switching frequency of the wireless charging is at an ideal switching frequency, and the switching frequency of the wireless charging may be adjusted when the current switching frequency deviates from the ideal switching frequency, to improve wireless charging efficiency of a wireless charging apparatus.

In a possible implementation, the first signal represents a peak current or a root-mean-square current of the alternating current; and the controller is further configured to generate the frequency adjustment signal in response to that the peak current or the root-mean-square current and the direct current meet a first relationship. The peak current or the root-mean-square current is usually readily available without increasing circuit design costs. Therefore, by using the peak current or the root-mean-square current and the direct current, whether the current switching frequency of the wireless charging is at the ideal switching frequency may be determined in a low-cost manner, and the switching frequency of the wireless charging may be adjusted when the current switching frequency deviates from the ideal switching frequency, to improve wireless charging efficiency.

In a possible implementation, the controller is further configured to generate the frequency adjustment signal in response to that a ratio of the peak current or the root-mean-square current to the direct current is different from a first threshold.

In a possible implementation, the controller is further configured to: generate, in response to that the ratio is greater than the first threshold, a first frequency adjustment signal used to increase the switching frequency; and generate, in response to that the ratio is less than the first threshold, a second frequency adjustment signal used to reduce the switching frequency. By calculating the ratio and comparing the ratio with the first threshold, whether the current switching frequency of the wireless charging is at the ideal switching frequency may be determined in a simple manner, and the switching frequency of the wireless charging may be adjusted when the current switching frequency deviates from the ideal switching frequency, to improve wireless charging efficiency.

In a possible implementation, the controller is further configured to generate the frequency adjustment signal based on a difference between the ratio and the first threshold. The frequency adjustment signal includes information representing an adjustment amount of the switching frequency, and the adjust amount of the switching frequency is associated with the difference. By calculating the ratio and comparing the ratio with the first threshold, whether the current switching frequency of the wireless charging is at the ideal switching frequency may be determined in a simple manner, and the switching frequency of the wireless charging may be adjusted when the current switching frequency deviates from the ideal switching frequency, to improve wireless charging efficiency.

In a possible implementation, the controller is further configured to: receive a third signal representing an adjusted alternating current flowing through the secondary coil and a fourth signal representing an adjusted direct current used to charge the load; determine, based on the third signal and the fourth signal, whether the adjusted alternating current and the adjusted direct current meet a second relationship; and generate, in response to whether the adjusted alternating current and the adjusted direct current meet the second relationship, a power adjustment signal used to adjust a wireless charging power. Power adjustment is performed after the ideal switching frequency is reached, so that wireless charging can be performed at the ideal switching frequency and an expected power.

In a possible implementation, the controller is further configured to: periodically determine, in response to generating the power adjustment signal, whether the alternating current flowing through the secondary coil and the direct current used to charge the load meet the second relationship; and if the alternating current flowing through the secondary coil and the direct current used to charge the load do not meet the second relationship, generate another frequency adjustment signal used to adjust the switching frequency. Whether the switching frequency of the wireless charging is at the ideal switching frequency is periodically detected, so that whether wireless charging is performed at the ideal switching frequency can be dynamically determined in a wireless charging process. In this way, after the ideal switching frequency is reached, for example, in a power adjustment process, the switching frequency of the wireless charging may be prevented from deviating from the ideal switching frequency again, so that wireless charging is basically always performed at the ideal switching frequency.

In a possible implementation, the alternating current represents a current at an end part of a coil of a wireless charging receive end or a current of a node directly connected to the wireless charging receive end, and the direct current represents a current used to directly charge the load. A wireless charging transmit end converts the direct current into the alternating current by using the inverter, the alternating current is transmitted to the receive end through coil coupling, and a rectifier rectifies the received alternating current to generate the direct current.

In a possible implementation, the wireless charging apparatus used as the wireless charging receive end includes a wireless communication interface (for example, a Bluetooth transmission device). The frequency adjustment signal is transmitted to the wireless communication interface of the wireless charging transmit end by using a wireless communication interface, and after receiving the frequency adjustment signal, a controller of the wireless charging transmit end controls an alternating current of the wireless charging transmit end, so that an alternating current received by the coil of the wireless charging receive end is based on an adjusted switching frequency.

In a possible implementation, the controller of the wireless charging receive end may transmit the frequency adjustment signal to the coil of the wireless charging transmit end in a modulation manner by using the wireless secondary coil, and the controller of the wireless charging transmit end parses out the frequency adjustment signal from the coil of the wireless charging transmit end. After receiving the frequency adjustment signal, the controller of the wireless charging transmit end controls the alternating current of the wireless charging transmit end, so that the alternating current received by the coil of the wireless charging receive end has an adjusted switching frequency. In this way, component costs of the wireless charging transmit end and the wireless charging receive end can be further reduced.

According to a third aspect of the present disclosure, an electronic component is provided. The electronic component includes a circuit board, and the wireless charging apparatus according to the second aspect is mounted on the circuit board.

According to a fourth aspect of the present disclosure, an electronic device is provided. The electronic device includes a housing, and the electronic component according to the third aspect is disposed in the housing.

According to a fifth aspect of the present disclosure, a method for controlling wireless charging is provided. The method includes: detecting a first rectification input voltage associated with an alternating current flowing through a secondary coil; detecting a second rectification input voltage associated with the alternating current flowing through the secondary coil; detecting a charging voltage used to charge a load; and generating, based on the first rectification input voltage, the second rectification input voltage, and the charging voltage, a frequency adjustment signal used to adjust a switching frequency of an inverter. The inverter is configured to generate, based on the frequency adjustment signal, an alternating current flowing through a primary coil, and the primary coil is configured to be magnetically coupled to the secondary coil, to perform the wireless charging. By detecting the rectification input voltage and the charging voltage, it may be determined whether a current switching frequency of the wireless charging is at an ideal switching frequency, and the switching frequency of the wireless charging may be adjusted when the current switching frequency deviates from the ideal switching frequency, to improve wireless charging efficiency.

In a possible implementation, the generating, based on the first rectification input voltage, the second rectification input voltage, and the charging voltage, a frequency adjustment signal used to adjust a switching frequency of an inverter includes: determining, based on the first rectification input voltage, the second rectification input voltage, and the charging voltage, whether a rining exists in the first rectification input voltage or the second rectification input voltage; and generating the frequency adjustment signal in response to a case of determining that the rining exists in the first rectification input voltage or the second rectification input voltage. A wireless charging apparatus includes a rectifier, and two input ends of the rectifier separately receive the first rectification input voltage and the second rectification input voltage. When the switching frequency is lower than the ideal switching frequency, the ringing exists in the rectification input voltage. That the ringing exists in the rectification input voltage may be determined by detecting the rectification input voltage and the charging voltage. When it is determined that the ringing occurs, it may be determined that the current switching frequency of wireless charging is lower than the ideal switching frequency. Because the rectification input voltage and the charging voltage are usually easily obtained, and no additional hardware design cost is required, it may be determined, by determining the ringing, in a low-cost manner that the current switching frequency is lower than the ideal switching frequency, and the switching frequency of the wireless charging may be correspondingly increased until the ideal switching frequency is reached.

In a possible implementation, the generating, based on the first rectification input voltage, the second rectification input voltage, and the charging voltage, a frequency adjustment signal used to adjust a switching frequency of an inverter includes: comparing the first rectification input voltage with the charging voltage to generate a first comparison output; comparing the second rectification input voltage with a ground voltage to generate a second comparison output; and determining, based on the first comparison output and the second comparison output, whether the rining exists in the first rectification input voltage or the second rectification input voltage.

In a possible implementation, the determining, based on the first comparison output and the second comparison output, whether the rining exists in the first rectification input voltage or the second rectification input voltage includes: performing a logical operation on the first comparison output and the second comparison output to generate a first logical output; determining a pulse width in the first logical output; and comparing the pulse width with a width threshold to determine whether the rining exists in the first rectification input voltage or the second rectification input voltage. By comparing the rectification input voltage with the charging voltage, it may be determined in a simple manner that the current switching frequency is lower than the ideal switching frequency, and the switching frequency of the wireless charging may be correspondingly increased until the ideal switching frequency is reached.

In a possible implementation, the logical operation includes performing a logical AND operation on the first comparison output and the second comparison output.

In a possible implementation, the generating, based on the first rectification input voltage, the second rectification input voltage, and the charging voltage, a frequency adjustment signal used to adjust a switching frequency of an inverter further includes: comparing the second rectification input voltage with the charging voltage to generate a third comparison output; comparing the first rectification input voltage with the ground voltage to generate a fourth comparison output; and determining, based on the third comparison output and the fourth comparison output, whether the rining exists in the first rectification input voltage or the second rectification input voltage.

In a possible implementation, the determining, based on the third comparison output and the fourth comparison output, whether the rining exists in the first rectification input voltage or the second rectification input voltage includes: performing the logical operation on the third comparison output and the fourth comparison output to generate a second logical output; determining a pulse width in the second logical output; and comparing the pulse width with the width threshold to determine whether the rining exists in the first rectification input voltage or the second rectification input voltage. By comparing the rectification input voltage with the charging voltage, it may be determined in the simple manner that the current switching frequency is lower than the ideal switching frequency, and the switching frequency of the wireless charging may be correspondingly increased until the ideal switching frequency is reached. The ringing is determined based on the first logic output and the second logic output, so that accuracy of ringing detection can be improved. Correspondingly, accuracy of switching frequency detection can be improved.

In a possible implementation, the logical operation includes performing the logical AND operation on the third comparison output and the fourth comparison output.

According to a sixth aspect of the present disclosure, an electronic apparatus is provided. The electronic apparatus includes a detector and a controller. The detector is configured to: detect a first rectification input voltage associated with an alternating current flowing through a secondary coil; detect a second rectification input voltage associated with the alternating current flowing through the secondary coil; and detect a charging voltage used to charge a load. The controller is coupled to the detector, and is configured to generate, based on the first rectification input voltage, the second rectification input voltage, and the charging voltage, a frequency adjustment signal used to adjust a switching frequency of an inverter. The inverter is configured to generate, based on the frequency adjustment signal, an alternating current flowing through a primary coil. The primary coil is configured to be magnetically coupled to the secondary coil for wireless charging. By detecting the rectification input voltage and the charging voltage, it may be determined whether a current switching frequency of the wireless charging is at an ideal switching frequency, and the switching frequency of the wireless charging may be adjusted when the current switching frequency deviates from the ideal switching frequency, to improve wireless charging efficiency.

In a possible implementation, the detector is further configured to determine, based on the first rectification input voltage, the second rectification input voltage, and the charging voltage, whether a rining exists in the first rectification input voltage or the second rectification input voltage; and generate a detection signal in response to a case of determining that the rining exists in the first rectification input voltage or the second rectification input voltage. The controller is configured to generate, based on the detection signal, the frequency adjustment signal used to adjust the switching frequency. A wireless charging apparatus includes a rectifier, and two input ends of the rectifier separately receive the first rectification input voltage and the second rectification input voltage. When the switching frequency is lower than the ideal switching frequency, the ringing exists in the rectification input voltage. That the ringing exists in the rectification input voltage may be determined by detecting the rectification input voltage and the charging voltage. When it is determined that the ringing occurs, it may be determined that the current switching frequency of wireless charging is lower than the ideal switching frequency. Because the rectification input voltage and the charging voltage are usually easily obtained, and no additional hardware design cost is required, it may be determined, by determining the ringing, in a low-cost manner that the current switching frequency is lower than the ideal switching frequency, and the switching frequency of the wireless charging may be correspondingly increased until the ideal switching frequency is reached.

In a possible implementation, the detector is further configured to compare the first rectification input voltage with the charging voltage to generate a first comparison output; compare the second rectification input voltage with a ground voltage to generate a second comparison output; determine, based on the first comparison output and the second comparison output, whether the rining exists in the first rectification input voltage or the second rectification input voltage; and generate the detection signal based on that the rining exists in the first rectification input voltage or the second rectification input voltage. The controller generates, based on the detection signal, the frequency adjustment signal used to adjust the switching frequency.

In a possible implementation, the detector is further configured to: perform a logical operation on the first comparison output and the second comparison output to generate a first logical output; determine a pulse width in the first logical output; compare the pulse width with a width threshold to determine whether the rining exists in the first rectification input voltage or the second rectification input voltage; and generate the detection signal in response to that the rining exists in the first rectification input voltage or the second rectification input voltage. By comparing the rectification input voltage with the charging voltage, it may be determined in a simple manner that the current switching frequency is lower than the ideal switching frequency, and the switching frequency of the wireless charging may be correspondingly increased until the ideal switching frequency is reached.

In a possible implementation, the logical operation includes performing a logical AND operation on the first comparison output and the second comparison output.

In a possible implementation, the detector is further configured to compare the second rectification input voltage with the charging voltage to generate a third comparison output; compare the first rectification input voltage with the ground voltage to generate a fourth comparison output; determine, based on the third comparison output and the fourth comparison output, whether the rining exists in the first rectification input voltage or the second rectification input voltage; and generate the detection signal in response to that the rining exists in the first rectification input voltage or the second rectification input voltage. The controller is configured to generate the frequency adjustment signal based on the detection signal.

In a possible implementation, the detector is further configured to: perform the logical operation on the third comparison output and the fourth comparison output to generate a second logical output; determine a pulse width in the second logical output; compare the pulse width with the width threshold to determine whether the rining exists in the first rectification input voltage or the second rectification input voltage; and generate the detection signal in response to that the rining exists in the first rectification input voltage or the second rectification input voltage. By comparing the rectification input voltage with the charging voltage, it may be determined in the simple manner that the current switching frequency is lower than the ideal switching frequency, and the switching frequency of the wireless charging may be correspondingly increased until the ideal switching frequency is reached. The ringing is determined based on the first logic output and the second logic output, so that accuracy of ringing detection can be improved. Correspondingly, accuracy of switching frequency detection can be improved.

In a possible implementation, the logical operation includes performing the logical AND operation on the third comparison output and the fourth comparison output.

According to a seventh aspect of the present disclosure, an electronic component is provided. The electronic component includes a circuit board, and the wireless charging apparatus according to the sixth aspect is mounted on the circuit board.

According to an eighth aspect of the present disclosure, an electronic device is provided. The electronic device includes a housing, and the electronic component according to the seventh aspect is disposed in the housing.

According to a ninth aspect of the present disclosure, a method for controlling wireless charging is provided. The method includes: receiving a frequency adjustment signal used to adjust a switching frequency of an inverter, where the frequency adjustment signal is generated based on a first signal representing an alternating current flowing through a secondary coil and a second signal representing a direct current used to charge a load, and the direct current is generated by rectifying the alternating current; and generating, based on the frequency adjustment signal, a switching signal used to control the inverter, where the inverter is configured to generate, based on the switching signal, an alternating current flowing through a primary coil, and the primary coil is configured to be magnetically coupled to the secondary coil, to perform the wireless charging. By comparing an alternating current of the wireless charging with a direct current charging current, it may be determined whether a current switching frequency of the wireless charging is at an ideal switching frequency, and the switching frequency of the wireless charging may be adjusted when the current switching frequency deviates from the ideal switching frequency, to improve wireless charging efficiency.

According to a tenth aspect of the present disclosure, an electronic apparatus is provided. The electronic apparatus includes a controller. The controller is configured to: receive a frequency adjustment signal used to adjust a switching frequency of an inverter, where the frequency adjustment signal is generated based on a first signal representing an alternating current flowing through a secondary coil and a second signal representing a direct current used to charge a load, and the direct current is generated by rectifying the alternating current; and generate, based on the frequency adjustment signal, a switching signal used to control the inverter, where the inverter is configured to generate, based on the switching signal, an alternating current flowing through a primary coil, and the primary coil is configured to be magnetically coupled to the secondary coil, to perform the wireless charging. By comparing an alternating current of the wireless charging with a direct current charging current, it may be determined whether a current switching frequency of the wireless charging is at an ideal switching frequency, and the switching frequency of the wireless charging may be adjusted when the current switching frequency deviates from the ideal switching frequency, to improve wireless charging efficiency of a wireless charging apparatus.

According to an eleventh aspect of the present disclosure, an electronic component is provided. The electronic component includes a circuit board, and the wireless charging apparatus according to the tenth aspect is mounted on the circuit board.

According to a twelfth aspect of the present disclosure, an electronic device is provided. The electronic device includes a housing, and the electronic component according to the eleventh aspect is disposed in the housing.

According to a thirteenth aspect of the present disclosure, an electronic system is provided. The electronic system includes a first electronic apparatus and a second electronic apparatus. The first electronic apparatus includes: a first current sensor, configured to generate a first signal representing an alternating current flowing through a secondary coil; a second current sensor, configured to generate a second signal representing a direct current used to charge a load, where the direct current is generated by rectifying the alternating current; and a first controller, configured to generate, based on the first signal and the second signal, a frequency adjustment signal used to adjust a switching frequency of an inverter, where the inverter is configured to generate, based on the frequency adjustment signal, an alternating current flowing through a primary coil, and the primary coil is configured to be magnetically coupled to the secondary coil for wireless charging. The second electronic apparatus includes a second controller configured to receive the frequency adjustment signal, and generate, based on the frequency adjustment signal, a switching signal used to control the inverter. By comparing an alternating current of the wireless charging with a direct current charging current, it may be determined whether a current switching frequency of the wireless charging is at an ideal switching frequency, and the switching frequency of the wireless charging may be adjusted when the current switching frequency deviates from the ideal switching frequency, to improve wireless charging efficiency of a wireless charging apparatus.

According to a fourteenth aspect of the present disclosure, a method for controlling wireless charging is provided. The method includes: receiving a frequency adjustment signal used to adjust a switching frequency of an inverter, where the frequency adjustment signal is generated based on a first rectification input voltage and a second rectification input voltage that are associated with an alternating current flowing through a secondary coil, and a charging voltage used to charge a load; and generating, based on the frequency adjustment signal, a switching signal used to control the inverter, where the inverter is configured to generate, based on the switching signal, an alternating current flowing through a primary coil, and the primary coil is configured to be magnetically coupled to the secondary coil, to perform the wireless charging. By detecting the rectification input voltage and the charging voltage, it may be determined whether a current switching frequency of the wireless charging is at an ideal switching frequency, and the switching frequency of the wireless charging may be adjusted when the current switching frequency deviates from the ideal switching frequency, to improve wireless charging efficiency.

According to a fifteenth aspect of the present disclosure, an electronic apparatus is provided. The electronic apparatus includes a controller. The controller is configured to: receive a frequency adjustment signal used to adjust a switching frequency of an inverter, where the frequency adjustment signal is generated based on a first rectification input voltage and a second rectification input voltage that are associated with an alternating current flowing through a secondary coil, and a charging voltage used to charge a load; and generate, based on the frequency adjustment signal, a switching signal used to control the inverter, where the inverter is configured to generate, based on the switching signal, an alternating current flowing through a primary coil, and the primary coil is configured to be magnetically coupled to the secondary coil for wireless charging. By detecting the rectification input voltage and the charging voltage, it may be determined whether a current switching frequency of the wireless charging is at an ideal switching frequency, and the switching frequency of the wireless charging may be adjusted when the current switching frequency deviates from the ideal switching frequency, to improve wireless charging efficiency.

According to a sixteenth aspect of the present disclosure, an electronic component is provided. The electronic component includes a circuit board, and the wireless charging apparatus according to the fifteenth aspect is mounted on the circuit board.

According to a seventeenth aspect of the present disclosure, an electronic device is provided. The electronic device includes a housing, and the electronic component according to the sixteenth aspect is disposed in the housing.

According to an eighteenth aspect of the present disclosure, an electronic system is provided. The electronic system includes a first electronic apparatus and a second electronic apparatus. The first electronic apparatus includes a detector configured to: detect a first rectification input voltage associated with an alternating current flowing through a secondary coil; detect a second rectification input voltage associated with the alternating current flowing through the secondary coil; and detect a charging voltage used to charge a load; and a first controller, coupled to the detector and configured to generate, based on the first rectification input voltage, the second rectification input voltage, and the charging voltage, a frequency adjustment signal used to adjust a switching frequency of an inverter, where the inverter is configured to generate, based on the frequency adjustment signal, an alternating current flowing through a primary coil, and the primary coil is configured to be magnetically coupled to the secondary coil for wireless charging. The second electronic apparatus includes a second controller configured to receive the frequency adjustment signal, and generate, based on the frequency adjustment signal, a switching signal used to control the inverter. By detecting the rectification input voltage and the charging voltage, it may be determined whether a current switching frequency of the wireless charging is at an ideal switching frequency, and the switching frequency of the wireless charging may be adjusted when the current switching frequency deviates from the ideal switching frequency, to improve wireless charging efficiency.

It should be understood that content described in the summary of the invention is not intended to limit key or important features of embodiments of the present disclosure, nor to limit the scope of the present disclosure. Other features of the present disclosure may be readily understood from the following description.

## BRIEF DESCRIPTION OF DRAWINGS

The foregoing and other features, advantages, and aspects of embodiments of the present disclosure become more apparent in conjunction with the accompanying drawings and with reference to the following detailed description. In the accompanying drawings, the same or similar reference numerals indicate the same or similar elements, where:

> FIG. 1 is a schematic diagram of a wireless charging system according to an embodiment of the present disclosure;
> FIG. 2 is a schematic block diagram of an electronic device according to an embodiment of the present disclosure;
> FIG. 3 is a schematic diagram of a relationship between a switching frequency and a waveform of wireless charging;
> FIG. 4 is a schematic diagram of a circuit of a wireless charging system according to an embodiment of the present disclosure;
> FIG. 5 is a schematic block diagram of a current detector according to an embodiment of the present disclosure;
> FIG. 6 is a schematic block diagram of a current detector according to another embodiment of the present disclosure;
> FIG. 7 is a schematic diagram of a circuit of a wireless charging system according to an embodiment of the present disclosure;
> FIG. 8 is a schematic diagram of a circuit of a detector according to an embodiment of the present disclosure;
> FIG. 9 is a schematic diagram of a waveform used to detect ringing according to an embodiment of the present disclosure;
> FIG. 10 is a schematic diagram of contrast waveforms used to detect ringing according to an embodiment of the present disclosure;
> FIG. 11 is a schematic flowchart of a method for wireless charging according to an embodiment of the present disclosure; and
> FIG. 12 is a schematic flowchart of a method for wireless charging according to another embodiment of the present disclosure.

## DESCRIPTION OF EMBODIMENTS

Embodiments of the present disclosure are described in more detail in the following with reference to the accompanying drawings. Although some embodiments of the present disclosure are shown in the accompanying drawings, it should be understood that the present disclosure may be implemented in various forms, and should not be construed as being limited to embodiments described herein. On the contrary, these embodiments are provided so that the present disclosure will be thoroughly and completely understood. It should be understood that the accompanying drawings and embodiments of the present disclosure are merely used as examples, but are not intended to limit the protection scope of the present disclosure.

In descriptions of embodiments of the present disclosure, the term "include" and similar terms thereof should be understood as open inclusion, that is, "include but are not limited to". The term "based" should be understood as "at least partially based". The terms "one embodiment" or "the embodiment" should be understood as "at least one embodiment". The terms "first", "second", and the like may indicate different or same objects. The term "and/or" represents at least one of two items associated with the term. For example, "A and/or B" indicates A, B, or A and B. Other explicit and implicit definitions may also be included below.

It should be understood that, in the following description of specific embodiments of the technical solutions provided in embodiments of this application, some repeated parts may not be described again, but it should be considered that the specific embodiments are mutually referenced and may be combined with each other.

As described above, transmission efficiency of both a Qi protocol solution in which a switching frequency is adjusted when a duty cycle is fixed or the duty cycle is adjusted when the switching frequency is fixed and a proprietary protocol solution in which the duty cycle and a voltage are adjusted when the switching frequency is fixed is not ideal. Specifically, wireless power transmission is a technology in which power is transmitted directly in space without passing through wires. Compared with that in conventional power transmission, in the wireless power transmission technology, devices do not need to be fixedly connected by using wires, but usually form a wireless charging link between each other in a loose coupling, arrangement, or approach manner. Therefore, great convenience is brought to a user in some application scenarios. Generally, in a wireless transmission system, if a secondary coil, a resonant capacitor parameter, and a relative position of the secondary coil are determined, an inverter at a wireless charging transmit end has only one fixed ideal switching frequency f0, so that a current of the secondary coil becomes an ideal sine wave. When a wireless charging current flowing through the secondary coil is in the ideal sine wave, wireless charging efficiency is highest. However, because a charging device and a charged device are connected to each other in the loose coupling manner, ideal switching frequencies f0 are different during each charging, which depends on factors such as a manner in which the charged device is placed on the charging device, a distance between the charged device and the charging device, and orientations of the charged device and the charging device. Therefore, a conventional charging device cannot predict or preset the ideal switching frequency f0, but adjusts wireless charging based on another parameter, for example, adjusts the switching frequency, the duty cycle, or the voltage. It should be noted that, in a conventional solution, the switching frequency is not adjusted to the ideal switching frequency f0, but is adjusted to meet a charging power requirement. In an adjustment process, an alternating current frequency of the wireless charging is not fixed or maintained at the ideal switching frequency f0, but may change randomly and dynamically within a specific range.

In some embodiments of the present disclosure, the switching frequency of the inverter at the wireless charging transmit end is adjusted by receiving a current or voltage parameter of a charging receive end and based on the current or voltage parameter of the charging receive end, so that a wireless charging apparatus can perform charging at the ideal switching frequency. This can improve charging efficiency and reduce a charging loss.

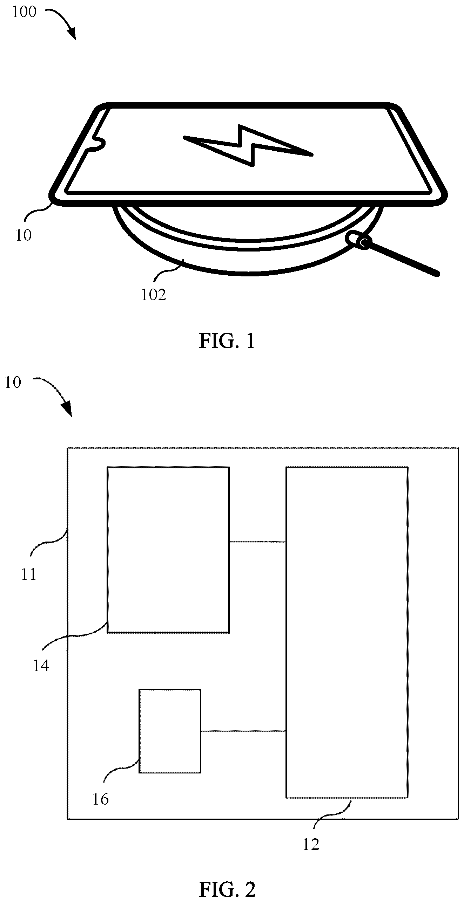

FIG. 1 is a schematic diagram of a wireless charging system 100 according to an embodiment of the present disclosure. The wireless charging system 100 includes a charging base 102 and an electronic device 10. The charging base 102 is coupled to a power supply, for example, a mains power supply. A primary coil is provided on the charging base 102, and a secondary coil is provided on the back of the electronic device 10. When the electronic device 10 approaches the charging base 102 to form loose coupling, because the primary coil of the charging base 102 is connected to an alternating current, an alternating magnetic field is generated. A change of the magnetic field causes an induced current to be generated in the secondary coil of the electronic device 10, to transfer energy from the primary coil to the secondary coil, to implement wireless charging. The charging base 102 and the electronic device 10 may coordinate with each other according to a predetermined protocol, to perform wireless power transmission based on a specific charging parameter (for example, a transmit power or a frequency) configuration. The electronic device 10 may be, for example, a smartphone, and the charging base 102 is, for example, a wireless charger of the smartphone. Although the wireless charger is used as an example of a charging apparatus herein and the smartphone is used as an example of a charged apparatus, the scope of the present disclosure is not limited thereto. The wireless charging system 100 according to this embodiment of the present disclosure may be further applied to another environment. For example, the charging apparatus may be, for example, a charging pile of an electric vehicle, and the charged apparatus may be, for example, the electric vehicle.

FIG. 2 is a schematic block diagram of the electronic device 10 according to an embodiment of the present disclosure. In an embodiment, the electronic device 10 may include an integrated circuit component 11 and a secondary coil that is not shown in the figure. The integrated circuit component 11 may be, for example, a printed circuit board integrated with a chip. The integrated circuit component 11 may include a first chip 12, a second chip 14, and a third chip 16. The integrated circuit component 11 may further include another chip or component that is not shown, for example, a discrete device like a resistor, a capacitor, or an inductor. The first chip 12 is, for example, a controller, and may communicate with the second chip 14 to transfer a command and/or data, and may further communicate with the third chip 16 to transfer a command and/or data. It may be understood that the first chip 12, the second chip 14, and the third chip 16 may further separately communicate with another chip or component. This is not limited in the present disclosure.

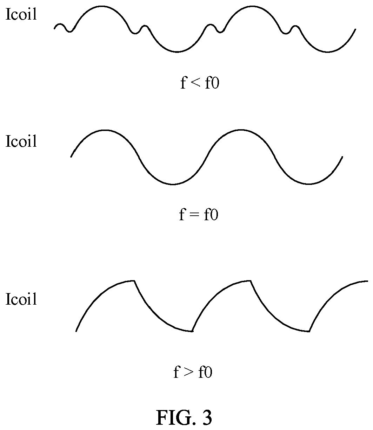

FIG. 3 is a schematic diagram of a relationship between a switching frequency and a waveform of wireless charging. It is found that a waveform of an alternating current Icoil flowing through a secondary coil is related to the switching frequency. As described above, because a charging device and a charged device are connected to each other in a loose coupling manner, ideal switching frequencies f0 are different during each charging, which depends on factors such as a manner in which the charged device is placed on the charging device, a distance between the charged device and the charging device, and orientations of the charged device and the charging device. When a switching frequency f of an alternating current inverter is less than an ideal switching frequency f0, the waveform of the Icoil is an irregular periodic waveform shown in the upper part of FIG. 3. When the switching frequency f of the alternating current inverter is greater than the ideal switching frequency f0, the waveform of the Icoil is an irregular periodic waveform shown in the lower part of FIG. 3. When the switching frequency f of the alternating current inverter is equal to or basically equal to the ideal switching frequency f0, the waveform of the alternating current Icoil is a smooth sine waveform shown in the middle part of FIG. 3. In a case in which wireless charging transmission is not performed at the ideal switching frequency, charging efficiency is usually reduced and energy is lost. This easily causes a charging apparatus to heat up, and even causes the charging apparatus to be damaged in a serious case. Therefore, it is expected that the wireless charging apparatus performs wireless charging at the ideal switching frequency f0 or a frequency close to the ideal switching frequency f0.

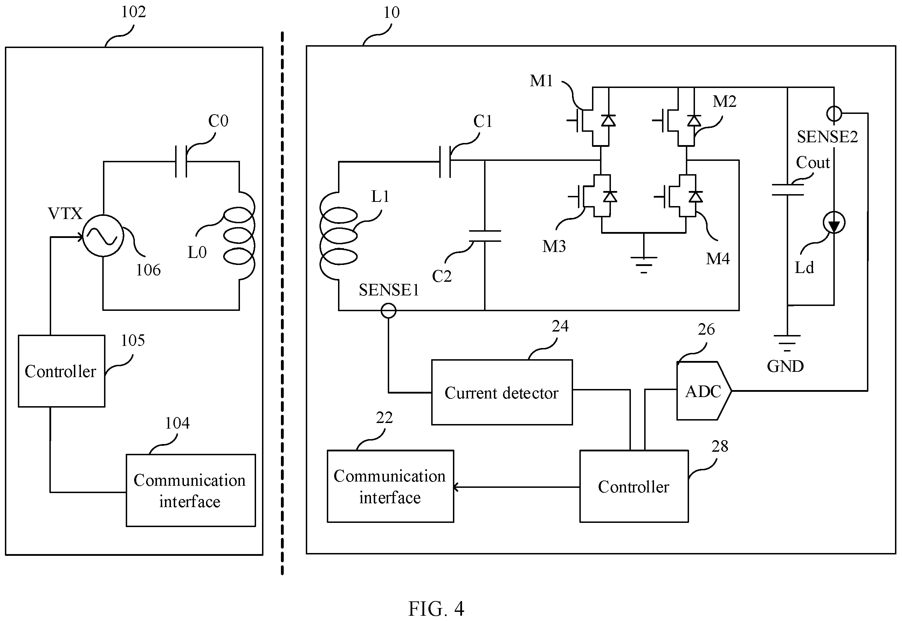

FIG. 4 is a schematic diagram of a circuit of a wireless charging system according to an embodiment of the present disclosure. In an embodiment, the wireless charging system may be, for example, the wireless charging system 100 shown in FIG. 1. Therefore, the content described in FIG. 1 may be applied to the wireless charging system shown in FIG. 4. Details are not described herein again. The charging base 102 may include, for example, an inverter 106, a capacitor C0, a primary coil L0, a controller 105, and a communication interface 104. In some embodiments, the charging base 102 may include more components that are not shown. This is not limited in the present disclosure. The inverter 106 may be coupled to an external power supply, such as a mains power supply, to generate a suitable charging current. The charging current generates a wireless charging signal through oscillation between the capacitor C0 and the primary coil L0. The controller 105 receives, through the communication interface 104, charging information from the communication interface 22 of the electronic device 10, for example, a frequency adjustment signal described below, and controls the inverter 106, based on the charging information, to perform a corresponding operation based on the frequency adjustment signal, for example, generate a switch signal. The inverter 106 operates based on the switch signal to generate a corresponding alternating current. In an embodiment, the communication interface 22 is, for example, a wireless communication interface such as a Bluetooth device. Optionally, the charging base 102 and the electronic device 10 may add wireless charging information to the wireless charging signal through modulation. For example, the controller 105 may demodulate the wireless charging information from the wireless charging signal transmitted by using a coil, and control the inverter 106 based on the wireless charging information. This is not limited in the present disclosure. Although the inverter 106, the controller 105, and the communication interface 104 are shown as discrete components in FIG. 4, this is merely an example and is not intended to limit the scope of the present disclosure. Some or all components of the inverter 106, the controller 105, and the communication interface 104 may be integrated into a single chip.

In an embodiment, the electronic device 10 includes a main charging loop, a first sensor, a second sensor, a controller, and a communication interface 22. The communication interface 22 may communicate with the communication interface 104 of the charging base 102, to transmit a charging parameter used for wireless charging, for example, a switching frequency, a voltage, a current, or a duty cycle. An active ground loop includes a secondary coil L1, filter capacitors C1 and C2, a rectifier bridge circuit, an output capacitor Cout, and a load Ld connected in parallel to the output capacitor Cout. The rectifier bridge circuit, for example, includes transistors M1, M2, M3, and M4, and is configured to rectify an alternating current to a direct current. The direct current generated by rectification charges the load Ld. In an embodiment, the load Ld may be, for example, a rechargeable battery. The secondary coil L1 and the primary coil L0 perform wireless power transmission in a magnetic coupling manner.

The first sensor is, for example, a current detector 24. For example, the current detector 24 may detect an alternating current flowing through the secondary coil L1 at SENSE1, determine a value of a peak current or a value of a root-mean-square current of the alternating current in a period, and transmit a first signal representing the peak current or the root-mean-square current to a controller 28. A second sensor 26 may be, for example, an analog-to-digital converter, which is configured to detect a direct current that charges the load Ld at SENSE2, and transmit a second signal representing the direct current to the controller 28. The controller 28 may generate, based on the first signal and the second signal, the frequency adjustment signal used to adjust a switching frequency of the inverter 106. For example, if the controller 28 determines, based on the first signal and the second signal, that a switching frequency of the wireless charging is not the ideal switching frequency f0, the controller 28 may generate the frequency adjustment signal, and wirelessly transmit the frequency adjustment signal to the communication interface 104 only by using the communication interface 22, so that the controller 105 adjusts the switching frequency of the wireless charging. Optionally, whether the switching frequency is the ideal switching frequency f0 may not be determined, but whether the frequency adjustment signal needs to be generated is directly determined based on the first signal and the second signal.

In an embodiment, the frequency adjustment signal is generated, for example, in response to that the peak current or the root-mean-square current and the direct current meet a first relationship. For example, the first signal represents a peak current *Ipeak,* and the second signal represents a direct current *Io*. After receiving the first signal and the second signal, the controller 28 calculates a ratio *Ipeak*/*Io*. When the ratio *Ipeak*/*Io* meets the following relationship indicated by formula (1), it may be determined that the current switching frequency f of the inverter 106 is less than the ideal switching frequency f0.

$$\frac{Ipeak}{Io} > \frac{\pi}{2} \quad (1)$$

In response to that the ratio *Ipeak*/*Io* is greater than a threshold $\pi/2$, the controller may generate a first frequency adjustment signal used to increase the switching frequency of the inverter 106.

When the ratio *Ipeak*/*Io* meets the following relationship indicated by formula (2), it may be determined that the current switching frequency f of the inverter 106 is greater than the ideal switching frequency f0.

$$\frac{Ipeak}{Io} < \frac{\pi}{2} \quad (2)$$

In response to that the ratio *Ipeak*/*Io* is less than the threshold $\pi/2$, the controller may generate a second frequency adjustment signal used to reduce the switching frequency of the alternating inverter 106.

When the ratio *Ipeak*/*Io* meets the following relationship indicated by formula (3), it may be determined that the current switching frequency f of the inverter 106 is equal to the ideal switching frequency f0.

$$\frac{Ipeak}{Io} = \frac{\pi}{2} \quad (3)$$

In response to that the ratio *Ipeak*/*Io* is equal to the threshold $\pi/2$, the controller may not generate the frequency adjustment signal used to adjust the switching frequency of the alternating current inverter 106 or generate a third frequency adjustment signal for maintaining the current switching frequency.

It may be understood that the foregoing formulas are merely examples, and may be other variations, for example, a ratio *Io/Ipeak* of *Io* to *Ipeak* may be used, and the ratio is compared with a threshold $2/\pi$. Alternatively, *Io* may be compared with *Ipeak* * $2/\pi$, or *Ipeak* may be compared with *Io* * $\pi/2$. All these variations may be considered as equivalent transformation forms of formulas (1) to (3).

In some other embodiments, the first signal may further represent a root-mean-square current of an alternating current flowing through the coil. Similarly, the frequency adjustment signal is generated, for example, in response to that the root-mean-square current and the direct current meet the first relationship. For example, the first signal represents a root-mean-square current *Irms,* and the second signal represents the direct current *Io*. After receiving the first signal and the second signal, the controller 28 calculates a ratio *Irms/Io*. When the ratio *Irms/Io* meets the following relationship indicated by formula (4), it may be determined that the current switching frequency f of the inverter is less than the ideal switching frequency f0.

$$\frac{Irms}{Io} > \frac{\pi}{2\sqrt{2}} \quad (4)$$

In response to that the ratio *Irms/Io* is greater than a threshold $\frac{\pi}{2\sqrt{2}}$, the controller may generate the first frequency adjustment signal used to increase the switching frequency of the inverter 106.

When the ratio *Irms/Io* meets the following relationship indicated by formula (5), it may be determined that the current switching frequency f of the inverter 106 is greater than the ideal switching frequency f0.

$$\frac{Irms}{Io} < \frac{\pi}{2\sqrt{2}} \quad (5)$$

In response to that the ratio *Irms/Io* is less than the threshold $\frac{\pi}{2\sqrt{2}}$, the controller may generate the second frequency adjustment signal used to reduce the switching frequency of the inverter 106.

When the ratio *Irms/Io* meets the following relationship indicated by formula (6), it may be determined that the current switching frequency f of the inverter 106 is equal to the ideal switching frequency f0.

$$\frac{Irms}{Io} = \frac{\pi}{2\sqrt{2}} \quad (6)$$

In response to that the ratio *Irms/Io* is equal to the threshold $\frac{\pi}{2\sqrt{2}}$, the controller may not generate the frequency adjustment signal or generate the third frequency adjustment signal for maintaining the current switching frequency.

It may be understood that the foregoing formulas are merely examples, and may be other variations, for example, a ratio *Io/Irms* of *Io* to *Irms* may be used, and the ratio is compared with the threshold $\frac{2\sqrt{2}}{\pi}$. Alternatively, *Irms* may be compared with $Io * \frac{\pi}{2\sqrt{2}}$, or *Io* may be compared with $Irms * \frac{2\sqrt{2}}{\pi}$. All these variations may be considered as equivalent transformation forms of formulas (4) to (6).

In some other embodiments, the controller 28 may generate the frequency adjustment signal based on a difference between the ratio and the first threshold. The frequency adjustment signal includes information representing an adjustment amount of the switching frequency, and the adjustamount of the switching frequency is associated with the difference. For example, in a case in which the first signal represents the peak current *Ipeak,* the controller 28 may generate the frequency adjustment signal based on a difference between the ratio *Ipeak/Io* and the first threshold $\frac{\pi}{2}$. The frequency adjustment signal may include information about an amount $\Delta f$ for adjusting the switching frequency, and the amount $\Delta f$ is associated with, for example, proportional to the difference ( $\frac{Ipeak}{Io} - \frac{\pi}{2}$ ). Optionally the controller 28 may also generate a corresponding frequency adjustment signal based on another difference ( $\frac{Io}{Ipeak} - \frac{2}{\pi}$ ). It may be understood that there may be another equivalent transformation form.

In a case in which the first signal represents the root-mean-square current *Irms,* the controller 28 may generate the frequency adjustment signal based on a difference between the ratio *Irms/Io* and the first threshold $\frac{\pi}{2\sqrt{2}}$. The frequency adjustment signal may include information about the amount $\Delta f$ for adjusting the switching frequency, and the amount $\Delta f$ is associated with, for example, proportional to the difference ( $\frac{Irms}{Io} - \frac{\pi}{2\sqrt{2}}$ ). Optionally, the controller 28 may also generate the corresponding frequency adjustment signal based on another difference ( $\frac{Io}{Irms} - \frac{2\sqrt{2}}{\pi}$ ). It may be understood that there may be another equivalent transformation form. By using the adjustment amount corresponding to the difference, the switching frequency of the wireless charging can be converged to the ideal switching frequency f0 quickly, and high-efficiency wireless charging can be performed.

After the frequency is adjusted, the switching frequency of the inverter 106 may reach the ideal switching frequency f0. However, a wireless charging power does not reach an expected transmission power at this time, and the wireless transmission power needs to be further adjusted. For example, the controller 28 receives, in a period after a power adjustment signal is generated, a third signal representing a power-adjusted alternating current flowing through the secondary coil L1 and a fourth signal representing a power-adjusted direct current used to charge the load Ld, where the third signal is similar to the first signal, and the fourth signal is similar to the second signal, but the third signal and the fourth signal are in a time period different from that for the first signal and the second signal. The controller 28 determines, based on the third signal and the fourth signal, whether the adjusted alternating current and the adjusted direct current meet a second relationship.

In a case in which the third signal represents the peak current, the controller 28 determines, for example, whether the peak current $Ipeak$ and the direct current $Io$ meet the foregoing formula (3) or a variation thereof. The controller 28 then generates, in response to that the second relationship is met (that is, the current switching frequency is the ideal switching frequency f0), the power adjustment signal used to adjust the wireless charging power. Optionally, in a case in which the third signal represents the root-mean-square, the controller 28 determines, for example, whether the root-mean-square current $Irms$ and the direct current $Io$ meet the foregoing formula (6) or a variation thereof. The controller 28 then generates, in response to that the second relationship is met (that is, the current switching frequency is the ideal switching frequency f0), the power adjustment signal used to adjust the wireless charging power.

The controller 28 may then communicate with the controller 105, for example, through a communication interface, to perform power adjustment, for example, adjust a voltage or a duty cycle. In an embodiment, after the ideal switching frequency f0 is reached, the controller 28 may adjust the wireless charging power based on a proportional integral differential (proportion integration differentiation, PID) loop recommended in a conventional Qi protocol.

However, in a power adjustment process, the ideal switching frequency f0 may change due to a change of an external environment such as a position or a load. Therefore, the controller 28 may periodically determine, in the foregoing manner, for example, according to the foregoing formulas (1) to (6), whether the current switching frequency of the inverter 106 is the ideal switching frequency f0. In an embodiment, the controller 28 periodically determines, in response to generating the power adjustment signal, whether the alternating current flowing through the secondary coil L1 and the direct current $Io$ used to charge the load meet the second relationship; and generates another frequency adjustment signal used to adjust the switching frequency of the inverter 106 if the alternating current flowing through the secondary coil L1 and the direct current $Io$ used to charge the load do not meet the second relationship. In other words, the controller 28 periodically determines, based on the alternating current peak current or the root-mean-square current and the direct current $Io$, whether the foregoing formula (3) or (6) or an equivalent transformation thereof is met, and determines, based on a result of the determining, whether to generate the frequency adjustment signal. This process is similar to the foregoing switching frequency adjustment process that is before the power adjustment. Details are not described herein again. The alternating current and the direct current are periodically detected to determine whether wireless charging is performed at the ideal switching frequency f0, to ensure that wireless charging is efficiently performed at the ideal switching frequency f0 in an entire charging period.

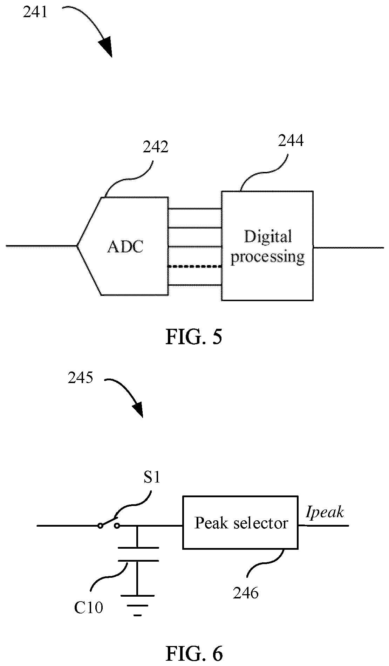

FIG. 5 is a schematic block diagram of a current detector 241 according to an embodiment of the present disclosure. The current detector 241 may be a specific implementation of the current detector 24 in FIG. 4, and includes an analog-to-digital converter 242 and a digital processor 244. The analog-to-digital converter 242 is configured to sample an alternating current at a main charging loop, for example, SENSE1, in FIG. 4 and convert the alternating current into a digital signal. The digital processor 244 is configured to process a received digital signal, for example, in a high-frequency sampling mode, compare a plurality of sampled values in a single period to determine a value of peak current, or generate a value of a root-mean-square current based on the plurality of sampled values. The digital processor 244 then transmits generated data to the controller 28. After receiving the value representing the peak current or the root-mean-square current, the controller 28 may determine, based on the value of the peak current or the value of the root-mean-square current and a value that represents the direct current $Io$ and that is from the ADC 242, whether a switching frequency needs to be adjusted for wireless charging. Although an implementation of the current detector 24 is shown in FIG. 5, it may be understood that this is merely an example, and is not intended to limit the scope of the present disclosure. In some embodiments, the digital processor 244 may be integrated into the controller 28. In some other embodiments, the analog-to-digital converter 242 and the digital processor 244 may be integrated together.

FIG. 6 is a schematic block diagram of a current detector 245 according to another embodiment of the present disclosure. The current detector 245 may be another specific implementation of the current detector 24 in FIG. 4, and includes a switch S1, a capacitor C10, and a peak selector 246. The switch S1 is controlled to be turned on or turned off by a clock signal, to sample an alternating current at a main charging loop, for example, SENSE1, in FIG. 4. The capacitor C10 may hold a sampled voltage, so that the peak selector 246 may receive a plurality of sampled outputs within one alternating current period, determine a value of a peak current within the alternating current period from the plurality of sampled outputs, and transmit the value of the peak current to the controller 28. After receiving the value representing the peak current, the controller 28 may determine, based on the value of the peak current and a value that represents the direct current Io and that is from the ADC 242, whether a switching frequency needs to be adjusted for wireless charging. Although an implementation of the current detector 24 is shown in FIG. 6, it may be understood that this is merely an example, and is not intended to limit the scope of the present disclosure.

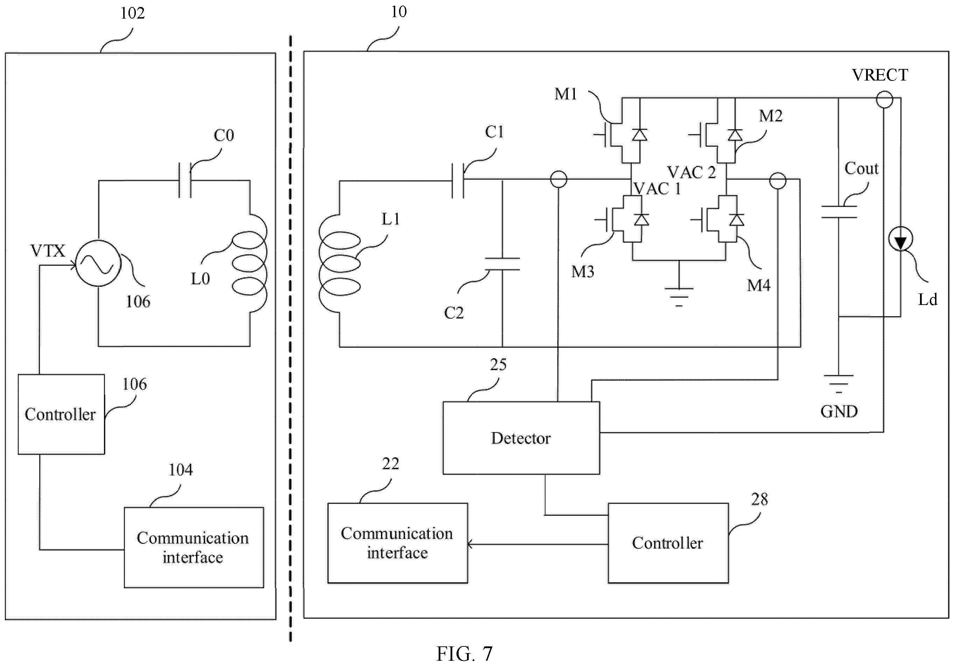

FIG. 7 is a schematic diagram of a circuit of a wireless charging system according to an embodiment of the present disclosure. In an embodiment, the wireless charging system may be, for example, the wireless charging system 100 shown in FIG. 1. Therefore, the content described in FIG. 1 may be applied to the wireless charging system shown in FIG. 7. Details are not described herein again. The charging base 102 may include, for example, an inverter 106, a capacitor C0, a primary coil L0, a controller 105, and a communication interface 104. In some embodiments, the charging base 102 may include more components that are not shown. This is not limited in the present disclosure. The inverter 106 may be coupled to an external power supply, such as a mains power supply, to generate a suitable charging current. The charging current generates a wireless charging signal through oscillation between the capacitor C0 and the primary coil L0. The controller 105 receives, through the communication interface 104, charging information from the communication interface 22 of the electronic device 10, for example, a frequency adjustment signal described below, and controls the inverter 106, based on the charging information, to perform a corresponding operation based on the frequency adjustment signal, for example, generate a switch signal. The inverter 106 operates based on the switch signal to generate a corresponding alternating current. Optionally, the charging base 102 and the electronic device 10 may add wireless charging information to the wireless charging signal through modulation. For example, the controller 105 may demodulate the wireless charging information from the wireless charging signal transmitted by using a coil, and control the inverter 106 based on the wireless charging information. This is not limited in the present disclosure. Although the inverter 106, the controller 105, and the communication interface 104 are shown as discrete components in FIG. 7, this is merely an example and is not intended to limit the scope of the present disclosure. Some or all components of the inverter 106, the controller 105, and the communication interface 104 may be integrated into a single chip.

In an embodiment, the electronic device 10 includes a main charging loop, a first sensor, a second sensor, a controller, and a communication interface 22. The communication interface 22 may communicate with the communication interface 104 of the charging base 102, to transmit a charging parameter used for wireless charging, for example, a switching frequency, a voltage, a current, or a duty cycle. An active ground loop includes a secondary coil L1, filter capacitors C1 and C2, a rectifier bridge circuit, an output capacitor Cout, and a load Ld connected in parallel to the output capacitor Cout. The rectifier bridge circuit, for example, includes transistors M1, M2, M3, and M4, and is configured to rectify an alternating current to a direct current. The direct current generated by rectification charges the load Ld. In an embodiment, the load Ld may be, for example, a rechargeable battery. The secondary coil L1 and the primary coil L0 perform wireless power transmission in a magnetic coupling manner.

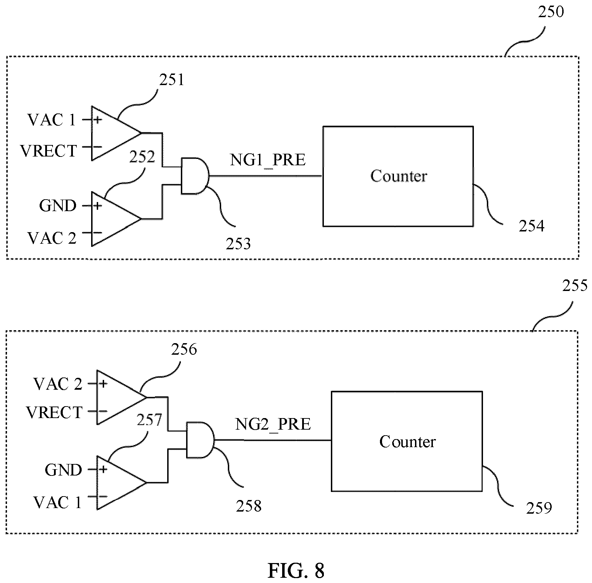

Unlike the current sensor shown in FIG. 4 used to detect a current, a detector 25 is used in the system of FIG. 7 to detect whether an alternating current flowing through the coil L1 is at the ideal switching frequency f0. Specifically, in an embodiment, the detector 25 is coupled to a rectifier and is configured to: detect a first rectification input voltage VAC 1 associated with the alternating current flowing through the secondary coil L1, a second rectification input voltage VAC 2 associated with the alternating current flowing through the secondary coil L1, and a charging voltage VRECT used to charge a load; and generate a corresponding detection signal. The controller 28 is coupled to the detector 25 and is configured to generate, based on the first rectification input voltage VAC 1, the second rectification input voltage VAC 2, and the charging voltage VRECT, a frequency adjustment signal used to adjust a switching frequency of the inverter 106. The following provides detailed descriptions with reference to FIG. 8 to FIG. 10.

FIG. 8 is a schematic diagram of a circuit of a detector according to an embodiment of the present disclosure. The detector may be, for example, a specific implementation of the detector 25 in FIG. 7. In an embodiment, the detector may include, for example, a first detection unit 250 and a second detection unit 255. The first detection unit 250 includes a comparator 251, a comparator 252, a logic gate 253, and a counter 254. In an embodiment, the logic gate 253 is, for example, an AND gate. The comparator 251 compares the first rectification input voltage VAC 1 with the charging voltage VRECT, and transmits a first comparison output to the logic gate 253. The comparator 251 compares a ground voltage GND with the second rectification input voltage VAC 2 and transmits a second comparison output to the logic gate 253. The logic gate 253 performs a logical operation on the first comparison output and the second comparison output, and generates a first logic output NG1_PRE. The counter 254 generates a first detection output based on the first logical output NG1_PRE. The controller 28 may then generate, based on the first detection output, a frequency adjustment signal used to adjust a switching frequency. Similarly, the second detection unit 255 performs an operation in a manner similar to that of the first detection unit. Details are not described herein again. Although two detection units 250 and 255 are shown herein, this is merely an example and is not intended to limit the scope of the present disclosure. In another embodiment, only one of the two detection units 250 and 255 may be used to generate the detection output. In some other embodiments, some or all of the first detection unit 250 and/or the second detection unit 255 may be integrated into the controller 28. This is not limited in the present disclosure.

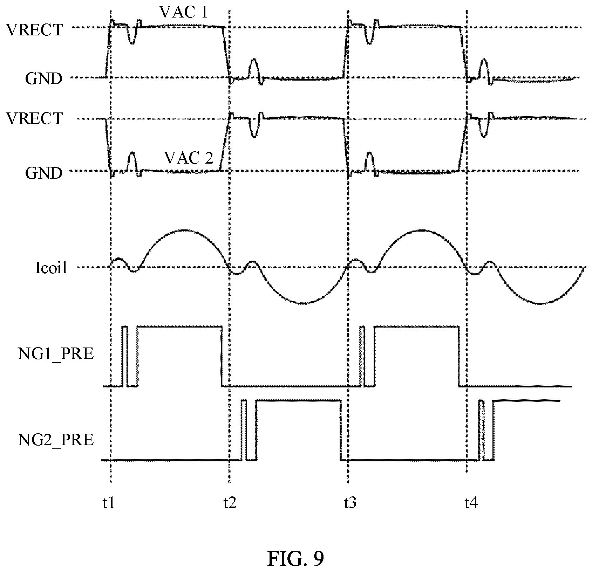

FIG. 9 is a schematic diagram of a waveform used to detect ringing according to an embodiment of the present disclosure. The waveform in FIG. 9 may be implemented by the detector described in FIG. 8, and therefore, same content uses a same marker. The waveform in FIG. 9 shows that ringing occurs in the first rectification input voltage VAC 1 and the second rectification input voltage VAC 2 after t1, t2, t3, and t4. Correspondingly, the coil current Icoil is also not a smooth sine waveform. When any ringing occurs, a short pulse occurs in the first logic output NG1_PRE that is of the logic gate 253 in FIG. 8 and that is based on the first comparison output and the second comparison output. After receiving the first logical output NG1_PRE, the counter 254 determines a pulse width in the first logical output NG1_PRE in a counting manner. The counter 254 may have a comparison circuit module inside to compare the pulse width in NG1_PRE with a width threshold. When the pulse width is less than the width threshold, the counter 254 determines the pulse as a short pulse and generates a detection signal indicating the short pulse (that is, indicating the ringing). The controller 28 may determine, based on the detection signal, that the ringing exists in the first rectification input voltage VAC 1 and the second rectification input voltage VAC 2, and therefore determine that a current switching frequency is lower than the ideal switching frequency f0. Similarly, the short pulse also exists in a second logic output NG2_PRE, and a manner of determining that the short pulse exists in the second logic output NG2_PRE is similar to a manner of determining that the short pulse exists in the first logic output NG1_PRE. Actually, both the first logic output NG1_PRE and the second logic output NG2_PRE may indicate ringing. Therefore, in some embodiments, only the first detection unit 250 or the second detection unit 255 may be used to save costs.

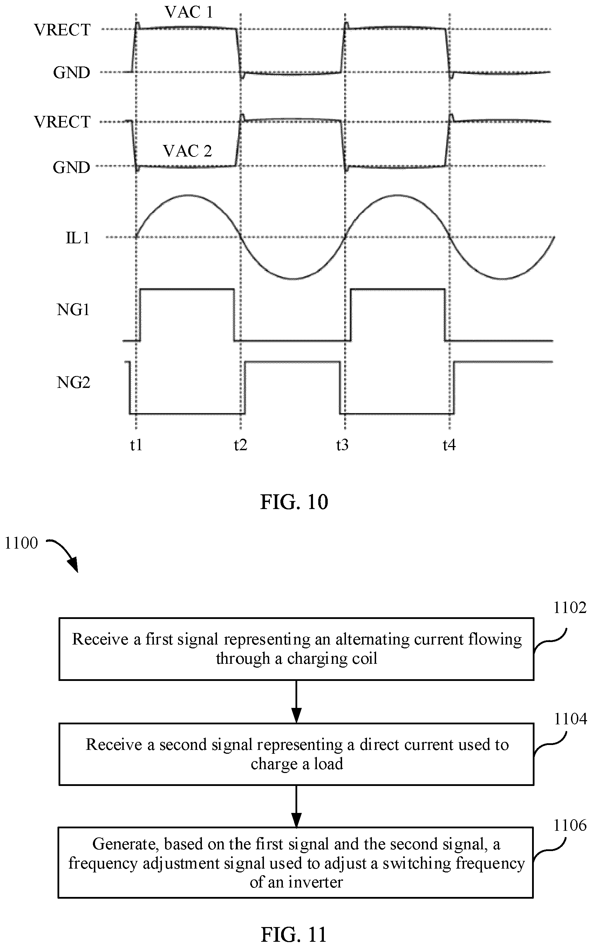

FIG. 10 is a schematic diagram of contrast waveforms used to detect ringing according to an embodiment of the present disclosure. The ringing does not occur in the first rectification input voltage VAC 1 and the second rectification input voltage VAC 2 after t1, t2, t3, and t4. Correspondingly, the coil current Icoil is in the smooth sine waveform, and a short pulse does not occur in the first logic output NG1_PRE and the second logic output NG2_PRE. In this case, the counter 254 may not output a detection signal or output a detection signal indicating that there is no short pulse. The controller 28 may therefore determine that no ringing exists in the first rectification input voltage VAC 1 and the second rectification input voltage VAC 2, and therefore determine that a current switching frequency is basically equal to the ideal switching frequency f0.

In an embodiment, the controller 28 may communicate with the controller 105 in the charging base 102 at a beginning of charging, so that wireless charging is performed at a low switching frequency at the beginning of wireless charging. The switching frequency is lower than the ideal switching frequency f0. The controller 28 may then generate a frequency adjustment signal based on the detection signal representing the ringing, to gradually adjust the switching frequency until the ideal switching frequency f0 is reached. After the ideal switching frequency f0 is reached, subsequent adjustment, for example, power adjustment and periodic power detection, may be performed in the manner described above in FIG. 4, which are not described herein again. Compared with the switching frequency adjustment manner in FIG. 4, a switching frequency adjustment manner of the wireless charging system in FIG. 8 is simpler and has lower costs. Although the switching frequency of the wireless charging system is adjusted to the ideal switching frequency f0 in a manner of detecting ringing in FIG. 8 to FIG. 10, the scope of the present disclosure is not limited thereto. Another detection manner is feasible. For example, in an embodiment, the detector 24 may directly determine whether the switching frequency is the ideal switching frequency f0 based on a voltage waveform of the first rectification input voltage VAC 1 or the second rectification input voltage VAC 2. For example, when the detector detects that the voltage waveform of the first rectification input voltage VAC 1 or the second rectification input voltage VAC 2 meets a voltage waveform shown in FIG. 10, it may be determined that wireless charging is performed at the ideal switching frequency f0, and another waveform indicates that wireless charging is not performed at the ideal switching frequency f0. Optionally, the coil current Icoil may also be detected, and whether wireless charging is performed at the ideal switching frequency f0 is determined based on a waveform of the coil current Icoil. For example, when an ideal sine wave is obtained by fitting a plurality of sampled values of the coil current Icoil, it may be determined that the ideal switching frequency f0 is used, and another waveform indicates that wireless charging is not performed at the ideal switching frequency f0. This is not limited in the present disclosure.

FIG. 11 is a schematic flowchart of a method 1100 for wireless charging according to an embodiment of the present disclosure. It may be understood that the foregoing aspects described for FIG. 4 to FIG. 6 may be selectively applied to the method 1100. 1102: Receive a first signal representing an alternating current flowing through a secondary coil. 1104: Receive a second signal representing a direct current used to charge a load, where the direct current is generated by rectifying the alternating current. 1106: Generate, based on the first signal and the second signal, a frequency adjustment signal used to adjust a switching frequency of an inverter.

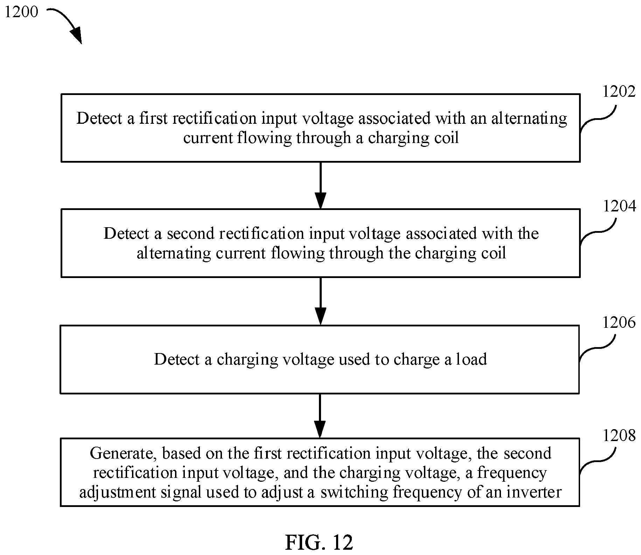

FIG. 12 is a schematic flowchart of a method 1200 for wireless charging according to another embodiment of the present disclosure. The foregoing aspects described for FIG. 7 to FIG. 10 may be selectively applied to the method 1200. 1202: Detect a first rectification input voltage associated with an alternating current flowing through a secondary coil. 1204: Detect a second rectification input voltage associated with the alternating current flowing through the secondary coil. 1206: Detect a charging voltage used to charge a load. 1208: Generate, based on the first rectification input voltage, the second rectification input voltage, and the charging voltage, a frequency adjustment signal used to adjust a switching frequency of an inverter.

Although the present disclosure has been described in language specific to structural features and/or methodological acts, it should be understood that the subject matter defined in the appended claims is not necessarily limited to the specific features or acts described above. Instead, the specific features and acts described above are merely example forms of implementing the claims.

**Claims**

1. A method for controlling wireless charging, comprising:

   receiving a first signal representing an alternating current flowing through a secondary coil;
   receiving a second signal representing a direct current used to charge a load, wherein the direct current is generated by rectifying the alternating current; and
   generating, based on the first signal and the second signal, a frequency adjustment signal used to adjust a switching frequency of an inverter, wherein the inverter is configured to generate, based on the frequency adjustment signal, an alternating current flowing through a primary coil, and the primary coil is configured to be magnetically coupled to the secondary coil, to perform the wireless charging.

2. The method according to claim 1, wherein the first signal represents a peak current or a root-mean-square current of the alternating current; and
   the generating a frequency adjustment signal used to adjust a switching frequency of an inverter comprises generating the frequency adjustment signal in response to that the peak current or the root-mean-square current and the direct current meet a first relationship.

3. The method according to claim 2, wherein the generating the frequency adjustment signal in response to that the peak current or the root-mean-square current and the direct current meet a first relationship comprises:
   generating the frequency adjustment signal in response to that a ratio of the peak current or the root-mean-square current to the direct current is different from a first threshold.

4. The method according to claim 3, wherein the generating the frequency adjustment signal in response to that a ratio of the peak current or the root-mean-square current to the direct current is different from a first threshold comprises:

   generating, in response to that the ratio is greater than the first threshold, a first frequency adjustment signal used to increase the switching frequency; or
   generating, in response to that the ratio is less than the first threshold, a second frequency adjustment signal used to reduce the switching frequency.

5. The method according to claim 3, wherein the generating the frequency adjustment signal in response to that a ratio of the peak current or the root-mean-square current to the direct current is different from a first threshold comprises:
   generating the frequency adjustment signal based on a difference between the ratio and the first threshold, wherein the frequency adjustment signal comprises information representing an adjustment amount of the switching frequency, and the adjust amount of the switching frequency is associated with the difference.

6. The method according to any one of claims 1 to 5, further comprising:

   receiving a third signal representing an adjusted alternating current flowing through the secondary coil and a fourth signal representing an adjusted direct current used to charge the load;
   determining, based on the third signal and the fourth signal, whether the adjusted alternating current and the adjusted direct current meet a second relationship; and
   generating, in response to that the adjusted alternating current and the adjusted direct current meet the second relationship, a power adjustment signal used to adjust a wireless charging power.

7. The method according to claim 6, further comprising:

   periodically determining, in response to generating the power adjustment signal, whether the alternating current flowing through the secondary coil and the direct current used to charge the load meet the second relationship; and
   if the alternating current flowing through the secondary coil and the direct current used to charge the load do not meet the second relationship, generating another frequency adjustment signal used to adjust the switching frequency.

8. An electronic apparatus, comprising:

   a first current sensor, configured to generate a first signal representing an alternating current flowing through a secondary coil;
   a second current sensor, configured to generate a second signal representing a direct current used to charge a load, wherein the direct current is generated by rectifying the alternating current; and
   a controller, configured to generate, based on the first signal and the second signal, a frequency adjustment signal used to adjust a switching frequency of an inverter, wherein the inverter is configured to generate, based on the frequency adjustment signal, an alternating current flowing through a primary coil, and the primary coil is configured to be magnetically coupled to the secondary coil, to perform the wireless charging.

9. The electronic apparatus according to claim 8, wherein the first signal represents a peak current or a root-mean-square current of the alternating current; and
   the controller is further configured to generate the frequency adjustment signal in response to that the peak current or the root-mean-square current and the direct current meet a first relationship.

10. The electronic apparatus according to claim 9, wherein the controller is further configured to generate the frequency adjustment signal in response to that a ratio of the peak current or the root-mean-square current to the direct current is different from a first threshold.

11. The electronic apparatus according to claim 10, wherein the controller is further configured to:

    generate, in response to that the ratio is greater than the first threshold, a first frequency adjustment signal used to increase the switching frequency; or
    generate, in response to that the ratio is less than the first threshold, a second frequency adjustment signal used to reduce the switching frequency.

12. The electronic apparatus according to claim 10, wherein the controller is further configured to generate the frequency adjustment signal based on a difference between the ratio and the first threshold, wherein the frequency adjustment signal comprises information representing an adjustment amount of the switching frequency, and the amount of the switching frequency is associated with the difference.

13. The electronic apparatus according to any one of claims 8 to 12, wherein the controller is further configured to:

    receive a third signal representing an adjusted alternating current flowing through the secondary coil and a fourth signal representing an adjusted direct current used to charge the load;
    determine, based on the third signal and the fourth signal, whether the adjusted alternating current and the adjusted direct current meet a second relationship; and
    generate, in response to whether the adjusted alternating current and the adjusted direct current meet the second relationship, a power adjustment signal used to adjust a wireless charging power.

14. The electronic apparatus according to claim 13, wherein the controller is further configured to:

    periodically determine, in response to generating the power adjustment signal, whether the alternating current flowing through the secondary coil and the direct current used to charge the load meet the second relationship; and
    if the alternating current flowing through the secondary coil and the direct current used to charge the load do not meet the second relationship, generate another frequency adjustment signal used to adjust the switching frequency.

15. An electronic component, comprising:

    a circuit board; and
    the electronic apparatus according to any one of claims 8 to 14, mounted on the circuit board.

16. An electronic device, comprising:

    a housing; and
    the electronic component according to claim 15, disposed in the housing.

17. A method for controlling wireless charging, comprising:

detecting a first rectification input voltage associated with an alternating current flowing through a secondary coil;
detecting a second rectification input voltage associated with the alternating current flowing through the secondary coil;
detecting a charging voltage used to charge a load; and
generating, based on the first rectification input voltage, the second rectification input voltage, and the charging voltage, a frequency adjustment signal used to adjust a switching frequency of an inverter, wherein the inverter is configured to generate, based on the frequency adjustment signal, an alternating current flowing through a primary coil, and the primary coil is configured to be magnetically coupled to the secondary coil, to perform the wireless charging.

18. The method according to claim 17, wherein the generating, based on the first rectification input voltage, the second rectification input voltage, and the charging voltage, a frequency adjustment signal used to adjust a switching frequency of an inverter comprises:

determining, based on the first rectification input voltage, the second rectification input voltage, and the charging voltage, whether a rining exists in the first rectification input voltage or the second rectification input voltage; and
generating the frequency adjustment signal in response to a case of determining that the rining exists in the first rectification input voltage or the second rectification input voltage.

19. The method according to claim 18, wherein the determining, based on the first rectification input voltage, the second rectification input voltage, and the charging voltage, whether a rining exists in the first rectification input voltage or the second rectification input voltage comprises:

comparing the first rectification input voltage with the charging voltage to generate a first comparison output;
comparing the second rectification input voltage with a ground voltage to generate a second comparison output; and
determining, based on the first comparison output and the second comparison output, whether the rining exists in the first rectification input voltage or the second rectification input voltage.

20. The method according to claim 19, wherein the determining, based on the first comparison output and the second comparison output, whether the rining exists in the first rectification input voltage or the second rectification input voltage comprises:

performing a logical operation on the first comparison output and the second comparison output to generate a first logical output;
determining a pulse width in the first logical output; and
comparing the pulse width with a width threshold to determine whether the rining exists in the first rectification input voltage or the second rectification input voltage.

21. An electronic apparatus, comprising:
a detector, configured to:

detect a first rectification input voltage associated with an alternating current flowing through a secondary coil;
detect a second rectification input voltage associated with the alternating current flowing through the secondary coil; and
detect a charging voltage used to charge a load; and
a controller, coupled to the detector and configured to generate, based on the first rectification input voltage, the second rectification input voltage, and the charging voltage, a frequency adjustment signal used to adjust a switching frequency of an inverter, wherein the inverter is configured to generate, based on the frequency adjustment signal, an alternating current flowing through a primary coil, and the primary coil is configured to be magnetically coupled to the secondary coil, to perform the wireless charging.

22. The electronic apparatus according to claim 21, wherein the detector is further configured to:

determine, based on the first rectification input voltage, the second rectification input voltage, and the charging voltage, whether a rining exists in the first rectification input voltage or the second rectification input voltage; and
generate a detection signal in response to a case of determining that the rining exists in the first rectification input voltage or the second rectification input voltage; and
the controller is further configured to generate, based on the detection signal, the frequency adjustment signal used to adjust the switching frequency.

23. The electronic apparatus according to claim 22, wherein the detector is further configured to:

compare the first rectification input voltage with the charging voltage to generate a first comparison output;

compare the second rectification input voltage with a ground voltage to generate a second comparison output;

determine, based on the first comparison output and the second comparison output, whether the rining exists in the first rectification input voltage or the second rectification input voltage; and

generate the detection signal in response to a case of determining that the rining exists in the first rectification input voltage or the second rectification input voltage.

24. The electronic apparatus according to claim 23, wherein the detector is further configured to:

perform a logical operation on the first comparison output and the second comparison output to generate a first logical output;

determine a pulse width in the first logical output;

compare the pulse width with a width threshold to determine whether the rining exists in the first rectification input voltage or the second rectification input voltage; and

generate the detection signal in response to a case of determining that the rining exists in the first rectification input voltage or the second rectification input voltage.

25. A method for controlling wireless charging, comprising:

receiving a frequency adjustment signal used to adjust a switching frequency of an inverter, wherein the frequency adjustment signal is generated based on a first signal representing an alternating current flowing through a secondary coil and a second signal representing a direct current used to charge a load, and the direct current is generated by rectifying the alternating current; and

generating, based on the frequency adjustment signal, a switching signal used to control the inverter, wherein the inverter is configured to generate, based on the switching signal, an alternating current flowing through a primary coil, and the primary coil is configured to be magnetically coupled to the secondary coil, to perform the wireless charging.

26. An electronic apparatus, comprising:
a controller, configured to:

receive a frequency adjustment signal used to adjust a switching frequency of an inverter, wherein the frequency adjustment signal is generated based on a first signal representing an alternating current flowing through a secondary coil and a second signal representing a direct current used to charge a load, and the direct current is generated by rectifying the alternating current; and

generate, based on the frequency adjustment signal, a switching signal used to control the inverter, wherein the inverter is configured to generate, based on the switching signal, an alternating current flowing through a primary coil, and the primary coil is configured to be magnetically coupled to the secondary coil, to perform the wireless charging.

27. An electronic system, comprising:
a first electronic apparatus, comprising:

a first current sensor, configured to generate a first signal representing an alternating current flowing through a secondary coil;

a second current sensor, configured to generate a second signal representing a direct current used to charge a load, wherein the direct current is generated by rectifying the alternating current; and

a first controller, configured to generate, based on the first signal and the second signal, a frequency adjustment signal used to adjust a switching frequency of an inverter, wherein the inverter is configured to generate, based on the frequency adjustment signal, an alternating current flowing through a primary coil, and the primary coil is configured to be magnetically coupled to the secondary coil, to perform the wireless charging; and

a second electronic apparatus, comprising:
a second controller, configured to receive the frequency adjustment signal, and generate, based on the frequency adjustment signal, a switching signal used to control the inverter.

28. A method for controlling wireless charging, comprising:

receiving a frequency adjustment signal used to adjust a switching frequency of an inverter, wherein the frequency adjustment signal is generated based on a first rectification input voltage and a second rectification input voltage that are associated with an alternating current flowing through a secondary coil, and a charging voltage used to charge a load; and

generating, based on the frequency adjustment signal, a switching signal used to control the inverter, wherein the inverter is configured to generate, based on the switching signal, an alternating current flowing through a primary coil, and the primary coil is configured to be magnetically coupled to the secondary coil, to perform the wireless charging.

29. An electronic apparatus, comprising:
a controller, configured to:

receive a frequency adjustment signal used to adjust a switching frequency of an inverter, wherein the frequency adjustment signal is generated based on a first rectification input voltage and a second rectification input voltage that are associated with an alternating current flowing through a secondary coil, and a charging voltage used to charge a load; and
generate, based on the frequency adjustment signal, a switching signal used to control the inverter, wherein the inverter is configured to generate, based on the switching signal, an alternating current flowing through a primary coil, and the primary coil is configured to be magnetically coupled to the secondary coil, to perform the wireless charging.

30. An electronic system, comprising:
a first electronic apparatus, comprising:

a detector, configured to:
detect a first rectification input voltage associated with an alternating current flowing through a secondary coil;
detect a second rectification input voltage associated with the alternating current flowing through the secondary coil; and
detect a charging voltage used to charge a load; and
a first controller, configured to generate, based on the first rectification input voltage, the second rectification input voltage, and the charging voltage, a frequency adjustment signal used to adjust a switching frequency of an inverter, wherein the inverter is configured to generate, based on the frequency adjustment signal, an alternating current flowing through a primary coil, and the primary coil is configured to be magnetically coupled to the secondary coil, to perform the wireless charging; and
a second electronic apparatus, comprising:
a second controller, configured to receive the frequency adjustment signal, and generate, based on the frequency adjustment signal, a switching signal used to control the inverter.

100

10

102

FIG. 1

10

11

14

16

12

FIG. 2

Icoil

f < f0

Icoil

f = f0

Icoil

f > f0

**FIG. 3**

FIG. 4

**FIG. 5**

**FIG. 6**

FIG. 7

**FIG. 8**

FIG. 9

FIG. 10

| Receive a first signal representing an alternating current flowing through a charging coil | 1102 |

| Receive a second signal representing a direct current used to charge a load | 1104 |

| Generate, based on the first signal and the second signal, a frequency adjustment signal used to adjust a switching frequency of an inverter | 1106 |

FIG. 11

1200

| | 1202 |
|---|---|
| Detect a first rectification input voltage associated with an alternating current flowing through a charging coil | |

| | 1204 |
|---|---|
| Detect a second rectification input voltage associated with the alternating current flowing through the charging coil | |

| | 1206 |
|---|---|
| Detect a charging voltage used to charge a load | |

| | 1208 |
|---|---|
| Generate, based on the first rectification input voltage, the second rectification input voltage, and the charging voltage, a frequency adjustment signal used to adjust a switching frequency of an inverter | |

FIG. 12

## INTERNATIONAL SEARCH REPORT

| International application No. |
|---|
| **PCT/CN2021/099509** |

**A. CLASSIFICATION OF SUBJECT MATTER**

H02J 50/12(2016.01)i;  H02J 50/80(2016.01)i;  H02M 1/44(2007.01)i

According to International Patent Classification (IPC) or to both national classification and IPC

**B. FIELDS SEARCHED**

Minimum documentation searched (classification system followed by classification symbols)

H02J; H02M

Documentation searched other than minimum documentation to the extent that such documents are included in the fields searched

Electronic data base consulted during the international search (name of data base and, where practicable, search terms used)

CNPAT, CNKI, EPODOC, WPI: 无线充电, 次级线圈, 初级线圈, 负载, 信号, 逆变器, 控制器, charging, load, wireless, signal, inverter, control, coil

**C. DOCUMENTS CONSIDERED TO BE RELEVANT**

| Category* | Citation of document, with indication, where appropriate, of the relevant passages | Relevant to claim No. |
|---|---|---|
| X | CN 111740510 A (QINGDAO LU YU ENERGY TECHNOLOGY CO., LTD.) 02 October 2020 (2020-10-02)<br>    description, paragraphs [0053]-[0084], and figures 1-11 | 1-16, 25-27 |
| X | CN 111740509 A (QINGDAO LU YU ENERGY TECHNOLOGY CO., LTD.) 02 October 2020 (2020-10-02)<br>    description, paragraphs [0054]-[0089], and figures 1-11 | 1-16, 25-27 |
| A | CN 104158269 A (GREATWALL INFORMATION INDUSTRY CO., LTD. et al.) 19 November 2014 (2014-11-19)<br>    entire document | 1-30 |
| A | CN 107276243 A (BEIHANG UNIVERSITY) 20 October 2017 (2017-10-20)<br>    entire document | 1-30 |
| A | CN 206202015 U (LANZHOU UNIVERSITY OF TECHNOLOGY) 31 May 2017 (2017-05-31)<br>    entire document | 1-30 |
| A | US 2021091591 A1 (ENERSYS DELAWARE INC.) 25 March 2021 (2021-03-25)<br>    entire document | 1-30 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 February 2022** | **11 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/099509**

| Patent document cited in search report | | | Publication date (day/month/year) | Patent family member(s) | | | Publication date (day/month/year) |
|---|---|---|---|---|---|---|---|
| CN | 111740510 | A | 02 October 2020 | None | | | |
| CN | 111740509 | A | 02 October 2020 | None | | | |
| CN | 104158269 | A | 19 November 2014 | CN | 104158269 | B | 16 March 2016 |
| CN | 107276243 | A | 20 October 2017 | None | | | |
| CN | 206202015 | U | 31 May 2017 | None | | | |
| US | 2021091591 | A1 | 25 March 2021 | EP | 3796516 | A1 | 24 March 2021 |

Form PCT/ISA/210 (patent family annex) (January 2015)